(19) Europäisches Patentamt
European Patent Office
Office européen des brevets

(11) Veröffentlichungsnummer: **0 262 582 B1**

# (12) EUROPÄISCHE PATENTSCHRIFT

(45) Veröffentlichungstag der Patentschrift: **19.11.92**

(51) Int. Cl.⁵: **G01N 27/416**, G01N 27/414

(21) Anmeldenummer: **87113937.4**

(22) Anmeldetag: **24.09.87**

## (54) Verfahren zur Bestimmung des Konzentrationsverhältnisses von Lithiumionen zu Natriumionen und Vorrichtung zur Durchführung dieses Verfahrens.

(30) Priorität: **01.10.86 CH 3927/86**

(43) Veröffentlichungstag der Anmeldung:
**06.04.88 Patentblatt 88/14**

(45) Bekanntmachung des Hinweises auf die Patenterteilung:
**19.11.92 Patentblatt 92/47**

(84) Benannte Vertragsstaaten:
**AT BE CH DE ES FR GB IT LI LU NL SE**

(56) Entgegenhaltungen:
**EP-A- 0 174 572**

**ANALYTICAL CHEMISTRY, Band 50, Nr. 6, Mai 1978, Seiten 811-817, American Chemical Society, Columbus, Ohio, US; P.D. GAARENSTROOM et al.: "Computer-controlled interference correction for ion-selective electrode measurements in a flowing system"**

(73) Patentinhaber: **Willi Möller AG**
**Gubelstrasse 37**
**CH-8050 Zürich(CH)**

(72) Erfinder: **Simon, Wilhelm, Prof.Dr.Dipl.-Ing.Chem.ETH**
**Hadlaubstrasse 63**
**D-8006 Zürich(CH)**

(74) Vertreter: **Blum, Rudolf Emil Ernst et al**
**c/o E. Blum & Co Patentanwälte Vorderberg 11**
**CH-8044 Zürich(CH)**

EP 0 262 582 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### HINTERGRUND DER ERFINDUNG

In jüngster Zeit wurden grosse Anstrengungen unternommen, um gegenüber Lithiumionen empfindliche Elektroden zu entwickeln, die eine ausreichende Selektivität für Lithiumionen gegenüber Natriumionen aufweisen, damit mit ihrer Hilfe die Lithiumaktivität in flüssigen Medien bestimmet werden kann, die etwa die hundertfache molare Menge an Natriumionen, bezogen auf deren Gehalt an Lithiumionen, aufweisen, wie dies zum Beispiel bei der Bestimmung der Lithiumaktivität im Blutserum der Fall ist. Die Elektroden zur Bestimmung der Lithiumaktivität, die eine gegenüber Lithiumionen empfindliche Membran aufweisen, müssen eine gegenüber Lithiumionen selektive Komponente enthalten, die eine sehr hohe Selektivität für Lithiumionen gegenüber Natriumionen aufweist. Die bisher bekannten ionenselektiven Membranen mit der höchsten Selektivität für Lithium gegenüber Natrium, ermöglichen eine Bestimmung der Lithiumkonzentration mit Eichkurven, die unter Einhaltung eines festgesetzten Ionenhintergrundes geeicht wurden. Da jedoch der Natriumgehalt im Blutserum etwa hundertmal so hoch ist wie der Lithiumgehalt, bewirken Schwankungen des Natriumgehaltes des Blutserums bei gleichbleibender Konzentration des Lithiums eine Aenderung des Messwertes.
Dieses Problem kann beseitigt werden, wenn statt der absoluten Lithiumaktivität in der Probe das Konzentrationsverhältnis von Lithiumionen zu Natriumionen bestimmt wird.

Die vorliegende Erfindung betrifft daher ein neues Verfahren zur Bestimmung des Konzentrationsverhältnisses von Lithiumionen zu Natriumionen und Vorrichtungen zur Durchführung dieses Verfahrens.

### BESCHREIBUNG DES STANDES DER TECHNIK

Verschiedene Dicarbonsäurediamide, die mit Kationen lipophile Komplexe bilden und die als Komponenten von ionenselektiven Membranen zur Bestimmung der Konzentration der fraglichen Kationen eingesetzt werden können, sind bereits in der Literatur beschrieben, Unter diesen bisher beschriebenen Dicarbonsäurediamiden befinden sich auch solche, die eine gewisse Selektivität für Lithiumionen im Vergleich zu anderen Alkalimetallionen besitzen.

Die Konzentrationen der wichtigsten Kationen, die in biologischen Flüssigkeiten anzutreffen sind, nämlich von $Na^+$, $K^+$, $Ca^{2+}$ und Wasserstoffionen können in klinischen Laboratorien leicht bestimmt werden, indem man Elektroden einsetzt, die mit einer entsprechenden ionenselektiven Membran ausgestattet sind. Im Gegensatz dazu wird die Testung auf Lithiumionen immer noch nach der Methode der Flammenphotometrie oder der Atomabsorptions-Spektrometrie durchgeführt. Die Feststellung der Konzentration von Lithiumionen im Blutserum ist dann sehr wichtig, wenn Patienten, die an manisch-depressiven Psychosen leiden, einer Therapie mit Lithiumionen unterworfen werden, oder wenn an Patienten Lithiumionen prophylaktisch verabreicht werden, um das Auftreten von manisch-depressiven Psychosen zu verhindern. Es sei in diesem Zusammenhang auf die Veröffentlichungen von A. Amidsen und M. Schou in Münch. Med. Wochenschr., 117(1975) 1417 und A. Amidsen, Dan. Med. Bull., 22(1975) 277 hingewiesen.

Die bei klinischen Untersuchungen zu bestimmenden Konzentrationen an Lithiumionen, beispielsweise im Blutserum, liegen bei 0,7 mmol bis 1,5 mmol, während der übliche physiologische Bereich des Blutserums an Natriumionen 135 mmol bis 150 mmol beträgt.

In EP-A-174 572 sind zwei Cyclohexan-1,2-dicarbon säurediamide beschrieben, welche von den bisher bekannten Verbindungen den höchsten Selektivitätskoeffizienten für Lithiumionen im Vergleich zu anderen Alkalimetallionen aufwiesen. Diese Verbindungen weisen die folgende Formel I

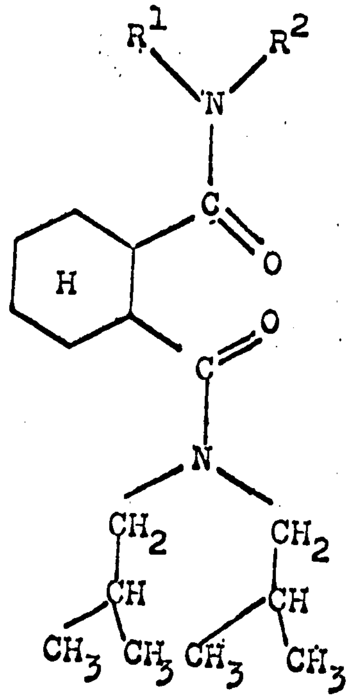

I

auf, wobei in dieser Formel I die Gruppierung der Formel

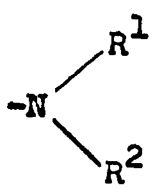

entweder die Formel

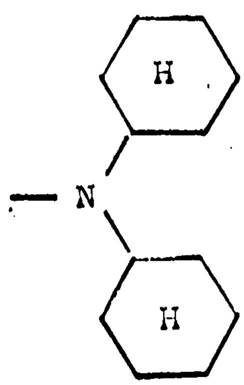

oder die Formel

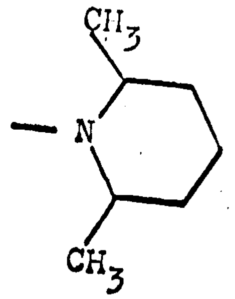

aufweist.

Ionenselektive Membranen, die als ionenselektive Komponente eine der beiden in EP-A-174 572 beschriebenen Cyclohexan-1,2-dicarbonsäurediamide enthalten und ausserdem als Weichmacher o-Nitrophenyl-n-octyläther enthalten, weisen eine hohe Selektivität für Lithiumionen gegenüber Natriumionen auf, aber der Wert für

$$\log K^{Pot}_{LiNa}$$

entspricht immer noch nicht ganz den Anforderungen, die man stellen muss, wenn die Aktivität der Lithiumionen im Blutserum bestimmt werden soll, das eine hundertmal so hohe Aktivität an störenden Natriumionen aufweist. Gemäss der Nicolsky-Eisenman Gleichung wäre ein Wert für

$$\log K^{Pot}_{LiNa}$$

von -4,3 wünschenswert. Der klinische Bereich der Lithiumionenkonzentration liegt jedoch nur knapp oberhalb der Feststellungsgrenze für Lithiumionen mit Hilfe dieser ionenempfindlichen Membranen, sodass eine Bestimmung der Lithiumaktivität nur möglich ist, wenn eine Eichung mit festgesetztem Ionenhintergrund vorgenommen wird.

Trotz dieser Eichung mit festgesetztem Ionenhintergrund treten jedoch Schwankungen der elektromotorischen Kraft (EMK) auf, die mit lithiumselektiven Elektroden bestimmt wird, welche als ionenselektive Komponente Verbindungen der Formel I enthalten und diese liegen im optimalen Fall bei 0,74 Millivolt. Diese Schwankungen der gemessenen EMK sind auf unterschiedliche Natriumaktivitäten in den getesteten Blutproben zurückzuführen, denn der physiologische Bereich der Natriumaktivität in Serumproben schwankt zwischen 135 und 150 mmol. Die Ungenauigkeit der Bestimmung der Lithiumkonzentration beträgt also etwa 5,1 %.

Ein nur am Rande zu erwähnender Nachteil der bisher empfindlichsten Elektroden zur Bestimmung der Aktivität von Lithiumionen, welche in ihrer ionenempfindlichen Membran Cyclohexan-1,2-dicarbonsäurediamide der Formel I enthalten und ausserdem den Weichmacher o-Nitrophenyl-n-octyläther, besteht darin, dass derartige Membranen nur eine kurze Lebensdauer von wenigen Wochen besitzen, wenn sie häufig mit Blutserum oder Gesamtblut in Berührung kommen.

Die Veröffentlichung Analytical Chemistry, Band 50, Nr. 6, Mai 1978, Seiten 811-817, betrifft die Bestimmung eines spezifischen Ions in Anwesenheit störender Ionen, wobei die störenden Ionen gegebenenfalls in der Probelösung in weit höheren Konzentrationen vorliegen können, als das Ion, dessen Konzentration bestimmt werden soll. Entsprechende Testergebnisse für die Bestimmung von Natriumionen in Anwesenheit unterschiedlicher Konzentrationen von Kaliumionen sind angegeben, wobei gegebenenfalls in den Probelösungen weit höhere Konzentrationen an Kaliumionen als Natriumionen vorliegen können.

Eine entsprechende Vorrichtung, welche eine natriumselektive Elektrode, eine kaliumselektive Elektrode und eine gemeinsame Referenzelektrode aufweist, ist in den Fig. 1 und 2 dargestellt, und es wird ferner hevorgehoben, dass dann, wenn nach der Methode der Nullpunkt-Potentiometrie gearbeitet wird, differentielle Messungen zwischen ionenselektiven Elektroden der gleichen Art durchgeführt werden, beispielsweise differentielle Messungen zwischen zwei natriumselektiven Elektroden.

Man sieht ferner aus der Gleichung 3 auf Seite 815, linke Spalte, dass mit diesen Messungen die Aktivität eines speziellen Ions i in Anwesenheit eines störenden Ions j bestimmt wird, dass jedoch gemäss dieser Gleichung nicht das Konzentrationsverhältnis der Ionen i zu den Ionen j gemessen wird. Auch die entsprechenden Tabellen III und IV auf Seite 816 zeigen, dass immer die Konzentrationen der Natriumionen in Anwesenheit von Kaliumionen, bzw. die Konzentration der Kaliumionen in Anwesenheit von Natriumionen, bestimmt wurden (siehe die Spalten 2, bzw. 5 der entsprechenden Tabellen, in denen die gemassenen Werte mit den tatsächlichen Werten der entsprechenden Testlösungen verglichen werden). In den Spalten 3 der Tabellen III und IV wird ausserdem das Konzentrationsverhältnis an Kaliumionen zu Natriumionen angegeben. Bei diesem Konzentrationsverhältnis handelt es sich jedoch um den entsprechenden vorgegebenen Wert der Testlösung und nicht um irgend einen gemessenen Wert.

Aus den vorangegangenen Erläuterungen ist ersichtlich, dass bei einer konstant gehaltenen Lithiumkonzentration die in der Probe gemessene Aktivität der Lithiumionen schwankt, wenn in der Probelösung unterschiedliche und wesentlich grössere Konzentrationen an Natriumionen vorliegen.

Ziel der vorliegenden Erfindung war es, diese Probleme dadurch zu beseitigen, dassin der entsprechenden Probelösung nicht, wie bisher mit einer für Lithiumionen empfindlichen Elektrode die Aktivität der Lithiumionen bestimmt wird, sondern durch die Verwendung sowohl einer gegenüber Lithiumionen empfindlichen Elektrode als auch einer gegenüber Natriumionen empfindlichen Elektrode, das Konzentrationsverhältnis von Lithiumionen zu Natriumionen bestimmt wird.

## BESCHREIBUNG DER ERFINDUNG

Ein Gegenstand der vorliegenden Erfindung ist ein Verfahren zur Bestimmung des Konzentrationsverhältnisses von Lithiumionen zu Natriumionen in einer Probelösung, wobei man in die Probelösung entweder

A) eine Elektrode zur Bestimmung von Lithiumionen und eine Elektrode zur Bestimmung von Natriumionen eintaucht und die Potentialdifferenz $\Delta$ V zwischen den beiden Elektroden bestimmt oder

B) wobei man in die Probelösung eine Elektrode zur Bestimmung von Lithiumionen, eine Elektrode zur Bestimmung von Natriumionen eintaucht und eine einzige äussere Referenzelektrode oder eine Commonelektrode verwendet, die Potentialdifferenz $V_1$ zwischen der Lithiumelektrode und der Referenzelektrode oder der Commonelektrode und die Potentialdifferenz $V_2$ zwischen der Natriumelektrode und der Referenzelektrode oder der Commonelektrode bestimmt, wobei $V_1$ - $V_2$ die Potentialdifferenz $\Delta$ V zwischen der Lithiumelektrode und der Natriumelectrode ergibt und

wobei man aus der Potentialdifferenz $\Delta$ V das Konzentrationsverhältnis von Lithiumionen zu Natriumionen berechnet.

Das erfindungsgemässe Verfahren führt dort zu besonders vorteilhaften Ergebnissen, wo das Konzentrationsverhältnis der Lithiumionen zu den Natriumionen in einer Probelösung bestimmt wird, die wesentlich höhere Gehalte an Natriumionen aufweist, als an Lithiumionen, beispielsweise die molaren Mengen an Natriumionen etwa 100 mal grösser sind als die molaren Mengen an Lithiumionen. Wenn man nämlich in eine Probelösung zur Bestimmung der Konzentration von Lithiumionen eine Elektrode zur Bestimmung von Lithiumionen und eine äussere Referenzelektrode und eventuell eine Commonelektrode eintaucht, und eine Eichung dieses Systems unter Einhaltung eines fixierten Ionenhintergrundes vornimmt, dann gibt der mit Hilfe dieser Eichkurve auf Basis der Nicolsky-Eisenman-Gleichungen bestimmte Wert die Aktivität der Lithiumionen an. Wird die Lithiumionenkonzentration konstant gehalten und der Ionenhintergrund verändert, dann ändert sich die gemessene Aktivität der Lithiumionen. In biologischen Systemen, beispielsweise im Blutserum, liegen die hundertfachen molaren Mengen an Natriumionen im Vergleich zu Lithiumionen vor und ferner ist in biologischen Systemen die Konzentration der Natriumionen relativ hohen Schwankungen unterworfen. Die Schwankungen des Ionenhintergrundes, wie zum Beispiel eine Veränderung der Konzentration der Natriumionen, ändern sowohl den Einzelionenaktivitätskoeffizienten der Lithiumionen als auch den Einzelionenaktivitätskoeffizienten der Natriumionen. Unter der Voraussetzung, dass die beiden Einzelionenaktivitätskoeffizienten etwa in der gleichen Weise geändert werden, wird dementsprechend bei der Bestimmung der Potentialdifferenz zwischen einer Elektrode zur Bestimmung von Lithiumionen und einer Elektrode zur Bestimmung von Natriumionen diese Störung durch die Aenderung des Einzelionenaktivitätskoeffizienten wieder ausgeglichen und es wird so tatsächlich das Konzentrationsverhältnis von Lithiumionen zu Natriumionen in der Probelösung bestimmt. Es zeigte sich ferner, dass der Natriumspiegel im Blutserum

von Patient zu Patient deutlich unterschiedlich sein kann und dass bei dem üblicherweise angenommenen physiologischen Bereich von 135 mmol Natriumionen bis 150 mmol Natriumionen im Blutserum einige Patienten Natriumkonzentrationen im Blutserum aufweisen, die nahe bei oder sogar unterhalb der angegebenen Untergrenze liegen, während andere Patienten wieder Natriumgehalte im Blutserum aufweisen, die nahe bei oder sogar oberhalb der angegebenen Obergrenze liegen. Wenn nun Patienten, die an manisch-depressiven Psychosen leiden, einer Therapie unter Verabreichung von Lithiumionen unterworfen werden, dan zeigte es sich, dass solche Patienten, die einen hohen Natriumgehalt im Blutserum aufweisen, eine Ueberdosierung der Lithiumionen wesentlich besser vertragen als Patienten, die im Blutserum einen niedrigen Gehalt an Natriumionen aufweisen. Dementsprechend ist für klinische Anwendungen die Bestimmung des Konzentrationsverhältnisses von Lithiumionen zu Natriumionen von grösserer Bedeutung als die alleinige Bestimmung der Konzentration der Lithiumionen ohne Berücksichtigung des Gehaltes an Natriumionen in dem fraglichen Blutserum.

Gemäss einer bevorzugten Anwendung des erfindungsgemässen Verfahrens wird dementsprechend das Konzentrationsverhältnis der Lithiumionen zu den Natriumionen in einer Serumprobe oder Blutprobe bestimmt, in welcher die Lithiumkonzentration im Bereich von 0,7 - 1,5 mmol liegt, während die Natriumionenkonzentration bei 135-150 mmol liegt.

Ein weiterer Gegenstand der vorliegenden Erfindung ist eine Vorrichtung zur Durchführung des erfindungsgemässen Verfahrens. Diese Vorrichtung ist dadurch gekennzeichnet, dass sie

A) eine Elektrode zur Bestimmung der Aktivität von Lithiumionen und
eine Elektrode zur Bestimmung der Aktivität von Natriumionen aufweist und dass
die Lithiumelektrode über ein Spannungsmessgerät mit der Natriumelektrode verbunden ist oder dass

B) die Vorrichtung zusätzlich zu der Lithiumelektrode und der Natriumelektrode noch eine gemeinsame Referenzelektrode oder eine Commonelektrode aufweist und die Lithiumelektrode mit der Referenzelektrode oder der Commonelektrode über ein Spannungsmessgerät elektrisch verbunden ist und die Natriumelektrode ebenfalls über ein Spannungsmessgerät mit der gleichen Referenzelektrode oder Commonelektrode elektrisch verbunden ist, und dass sich der ionenempfindliche Teil der Lithiumelektrode und der ionenempfindliche Teil der Natriumelektrode bzw. die Referenzelektrode oder Commonelektrode so angeordnet sind, daß sie sich im Betrieb in Berührung mit der Probelösung befinden.

Ein Beispiel für Lithiumelektroden zur Bestimmung der Lithiumaktivität, bzw. Natriumelektroden zur Bestimmung der Natriumaktivität, sind solche, die eine innere Elektrodenfüllung aufweisen, in die eine innere Ableitung eintaucht und ferner eine für Lithiumionen, bzw. Natriumionen empfindliche Membran, die auf der Innenseite mit der inneren Elektrodenfüllung in Berührung steht und deren Aussenseite bei der Durchführung einer Messung mit der Messlösung in Berührung steht.

Eine entsprechende Vorrichtung zur Bestimmung des Konzentrationsverhältnisses von Lithiumionen zu Natriumionen ist dadurch gekennzeichnet, dass sie

A) eine Elektrode zur Bestimmung der Aktivität von Lithiumionen aufweist, die eine innere Elektrodenfüllung, in die eine innere Ableitung eintaucht und eine für Lithiumionen empfindliche Membran aufweist, welche eine für Lithiumionen empfindliche Komponente enthält,

B) eine Elektrode zur Bestimmung der Aktivität von Natriumionen aufweist, die eine innere Elektrodenfüllung, in welche eine innere Ableitung eintaucht und eine für Natriumionen empfindliche Membran aufweist, die eine für Natriumionen empfindliche Komponente enthält und dass
die innere Ableitung der Lithiumelektrode über ein Spannungsmessgerät mit der inneren Ableitung der Natriumelektrode verbunden ist oder dass
die Vorrichtung zusätzlich zu der Lithiumelektrode und der Natriumelektrode noch eine gemeinsame Referenz-elektrode oder eine Commonelektrode aufweist und die innere Ableitung der Lithiumelektrode mit der Referenz-elektrode oder der Commonelektrode über ein Spannungsmessgerät elektrisch verbunden ist und die innere Ableitung der Natriumeletrode ebenfalls über ein Spannungsmessgerät mit der gleichen Referenzelektrode oder Commonelektrode elektrisch verbunden ist,
und dass sich die ionenempfindliche Membran der Lithiumelektrode und die ionenempfindliche Membran der Natriumelektrode bzw. die Referenzelektrode im Betrieb eingetaucht in die Probelösung befinden.

Sogenannte Commonelektrode, beispielsweise ein Platindraht, eingetaucht in die Probelösung, werden seit einiger Zeit zusätzlich zur äusseren mit einem Stromschlüssel ausgestatteten Referenzelektrode zur Bestimmung von Potentialdifferenzen, also der EMK von Messketten, eingesetzt. Ferner ist es auch möglich, solche Commonelektroden in Messketten zusätzlich zu äusseren Referenzelektroden zu verwenden, wobei messtechnische Vorteile erzielt werden. Es sei in diesem Zusammenhang beispielsweise auf die Veröffentlichung von P. Anker, E. Wieland, D. Ammann, R. E. Dohner, R. Asper und W. Simon unter dem Titel "Neutral Carrier Based Ion-Selective Electrode for the Determination of Total Calcium in Blood Serum" in Analytical Chemistry, 1981, 53, 1970, Seiten 1970 - 1974, verwiesen, und dort wird auch ein schematischer Schnitt durch ein Durchflusselektrodensystem unter Verwendung einer solchen Commonelektrode schematisch dargestellt.

Die verwendete lithiumselektive Elektrode enthielt als Elektrodenfüllung Lithiumchlorid und die innere Ableitung war ein mit Silberchlorid beschichteter Silberdraht. Die natriumselektive Elektrode enthielt als Elektrodenfüllung eine Natriumchloridlösung und die innere Ableitung war ebenfalls ein mit Silberchlorid beschichteter Silberdraht. Die Bestimmungen wurden also mit einem Zelltyp des folgenden Aufbaus durchgeführt:

| Ag;AgCl,NaCl | ‖ Membrane für $Na^+$ ‖ | Probe-lösung | ‖ Membrane für $Li^+$ ‖ | LiCl,AgCl;Ag |
|---|---|---|---|---|

$Na^+$-selektive Elektrode (Ag;AgCl,NaCl ‖ Membrane für $Na^+$ ‖)

$Li^+$-selektive Elektrode (‖ Membrane für $Li^+$ ‖ LiCl,AgCl;Ag)

Die gemessene elektromotorische Kraft, also die EMK, ausgedrückt in mV für die oben angegebene Zellanordnung kann, basierend auf den Nicolsky-Eisenman-Gleichungen (JUPAC) für die lithiumselektive Halbzelle, bzw. für die natriumselektive Halbzelle, angegeben werden und damit ergibt sich für die oben angeführte Zellanordnung die folgende Formel:

$$\mathrm{EMK[mV]} = E_o + s \cdot \log \left(\frac{a_{Li}}{a_{Na}} + K^{Pot}_{LiNa}\right)$$

In dieser Formel bedeutet

$E_o$ = die konstante EMK, die temperaturabhängig ist,

s = 2,303 RT/F = 59,16 mV (bei 25° C),

$K^{Pot}_{LiNa}$ = Selektivitätsfaktor für die lithiumselektive Elektrode,

$a_{Li}$ = Aktivität der Lithiumionen in der Probelösung,

$a_{Na}$ = Aktivität der Natriumionen in der Probelösung.

Es wurden für die oben angeführte Gleichung die folgenden Annahmen getroffen:

1. Die für Lithiumionen selektive Halbzelle und ebenso die für Natriumionen selektive Halbzelle weisen in reinen Salzlösungen, die jeweils nur $Li^+$-Salz, bzw. $Na^+$-Salze enthalten, den theoretischen Nernst-Anstieg auf.

2. Die natriumselektive Elektrode wird durch andere in der Probelösung anwesende Ionen nicht gestört.

3. Die lithiumselektive Elektrode wird nur von den in der Probelösung anwesenden Natriumionen gestört, nicht jedoch von anderen in der Probelösung anwesenden Ionen.

Wenn man die zusätzliche Annahme trifft, dass die Einzelionenaktivitätskoeffizienten für die Lithiumionen und die Natriumionen gleich sind, dann kann die EMK für die oben angeführte Zell-Anordnung anstelle der oben angeführten Formel durch die folgende Formel ausgedrückt werden:

$$\mathrm{EMK[mV]} = E_o + s \log\left(\frac{c_{Li}}{c_{Na}} + K^{Pot}_{LiNa}\right).$$

In der oben angeführten Gleichung bedeutet

$c_{Li}$ die molare Konzentration an Lithiumionen in der Probelösung und

$c_{Na}$ die molare Konzentration an Natriumionen in der Probelösung.

Gemäss einer bevorzugten Ausführungsart der erfindungsgemässen Vorrichtung ist diese eine Durchflusselektrode, die einen dünnen Kanal zur Aufnahme der Probelösung aufweist, wobei in diesen Kanal die ionenempfindliche Membran der Lithiumelektrode und die ionenempfindliche Membran der Natriumelektrode hineinragt und so bei Gebrauch der Elektrode mit der Probelösung in Berührung kommt. Im allgemeinen ist es vorteilhaft, wenn eine allenfalls vorhandene Referenzelektrode ebenfalls in den Kanal hineinragt und so bei der Durchführung einer Messung mit der Probelösung in Berührung kommt und eine allenfalls vorhandene Commonelektrode kann eventuall auch in den Kanal hineinrage, muss ober nicht.

Durchflusselektroden sind zur Bestimmung kleiner Probenmengen in der Grössenordnung von 15 $\mu$l gut geeignet und anhand des Beispiels 2 und der Zeichnung wird eine spezielle Ausführungsart einer derartigen Durchflusselektrode näher erläutert.

In den erfindungsgemässen Vorrichtungen enthält die ionenempfindliche Membran der Lithiumelektrode die für Lithiumionen empfindliche Komponente vorzugsweise in einer Polymermatrix, beispielsweise aus Polyvinylchlorid, und ferner ist in dieser Membran im allgemeinen ausserdem ein Weichmacher anwesend, vorzugsweise ein relativ unpolarer lipophiler Weichmacher.

In der gleichen Weise enthält auch die für Natriumionen empfindliche Membran der Natriumelektrode vorzugsweise zusätzlich zu der gegenüber Natriumionen empfindlichen Komponente, eine Polymermatrix, vorzugsweise aus Polyvinylchlorid und ausserdem in allgemeinen noch einen Weichmacher, vorzugsweise einen relativ unpolaren lipophilen Weichmacher.

Bevorzugte lithiumselektive Komponenten der Membranen der Lithiumelektrode sind die in EP-A-174 572 beschriebenen Cyclohexan-1,2-dicarbonsäurediamide der Formel I

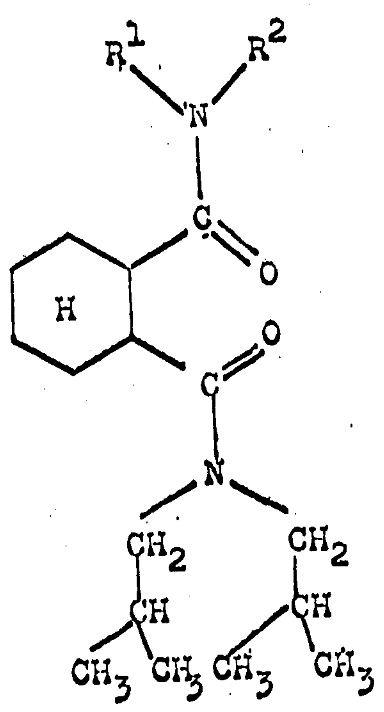

I

in denen die Gruppierung der Formel

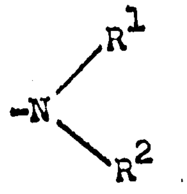

entweder die Formel

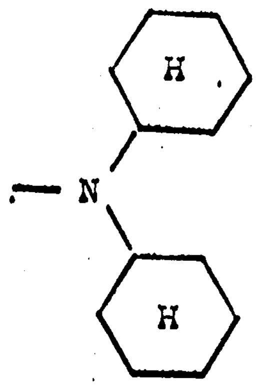

oder die Formel

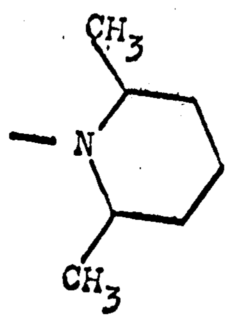

aufweist. Von diesen beiden Verbindungen ist die zuerst genannte, in der die amidbildende Gruppe von Dicyclohexylamin stammt, bevorzugt.

Weitere bevorzugte lithiumselektive Komponenten, die in den Membranen der erfindungsgemässen Lithiumelektroden eingesetzt werden, sind die nicht zum Stande der Technik gehörenden Dicarbonsäurediamide der Formel II

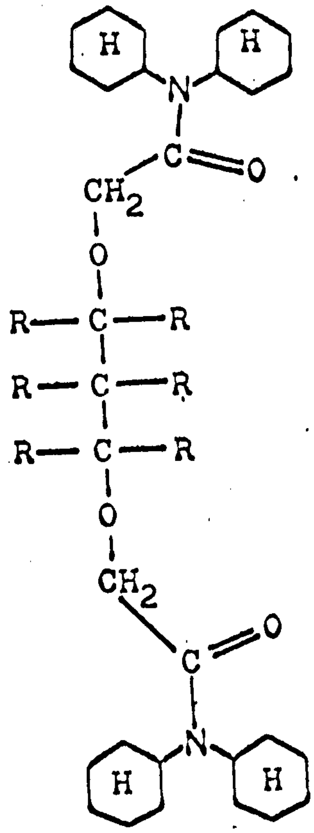

II

die in der am 23. September 1986 eingereichten Schweizer Patentanmeldung 3795/86-6 beschrieben sind. In diesen neuen Verbindungen der Formel II bedeuten die Reste R unabhängig voneinander Wasserstoffatome, Alkylreste, Alkenylreste oder Alkinylreste mit bis zu 20 Kohlenstoffatomen.

Die Natriumelektrode kann in ihrer für Natriumionen empfindlichen Membran irgendwelche der in der Literatur beschriebenen, gegenüber Natriumionen selektiven Komponente enthalten, oder sie kann auch eine neue, bis jetzt noch nicht beschriebene, für Natriumionen selektive Komponente enthalten. Bevorzugt, gegenüber Natriumionen selektive Komponenten sind Dicarbonsäurediamide. Von diesen sind diejenigen speziell bevorzugt, bei welchen die beiden Carboxamidgruppen des Dicarbonsäurediamides jeweils über einen 1 bis 4 Kettenglieder aufweisenden aliphatischen Rest, dessen Kette eine Kohlenwasserstoffkette oder eine durch ein Ethersauerstoffatom unterbrochene Kohlenwasserstoffkette ist, an einem gesättigten oder ungesättigten aliphatischen Rest, einen cycloaliphatischen Rest oder einen aromatischen Rest gebunden sind.

Speziell bevorzugte derartige natriumselektive Komponenten, die in der Membran der Natriumelektrode enthalten sind, sind neue Verbindungen, die alle unter die folgende Formel III

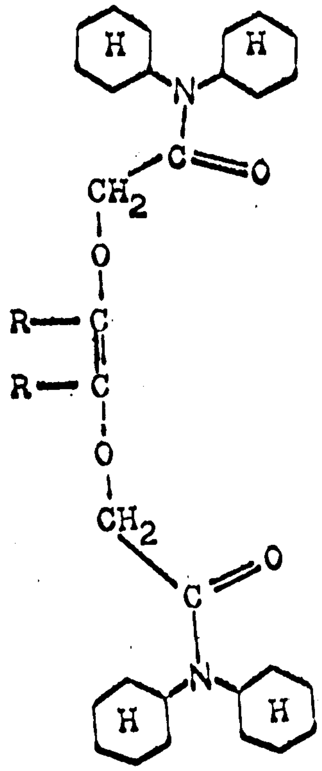

III

fallen, wobei in dieser Formel III die Reste R unabhängig voneinander Wasserstoffatome, Alkylgruppen, Alkenylgruppen oder Alkinylgruppen mit bis zu 20 Kohlenstoffatomen darstellen oder
die beiden Reste R gemeinsam mit den Kohlenstoffatomen, an welche sie gebunden sind, einen cycloaliphatischen oder aromatischen Rest darstellen und wobei vorzugsweise die Gruppe der Formel

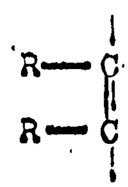

für einen aromatischen Rest der Formel

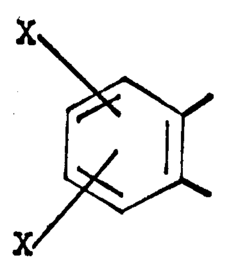

steht, in welcher die beiden Substituenten X unabhängig voneinander für Wasserstoffatome, relativ unpolare Substituenten, wie Alkylgruppen, Alkenylgruppen, Nitrogruppen oder Halogenatome stehen oder die beiden Gruppen X gemeinsam mit den Kohlenstoffatomen, an welche sie gebunden sind, einen ankondensierten, aromatischen oder heteroaromatischen Kern darstellen.

Die vorliegende Erfindung sei nun anhand der Beispiele näher erläutert:

Beispiel 1

Herstellung von ionenempfindlichen Membranen für die Lithiumelektrode, bzw. die Natriumelektrode

Es wurden zwei lithiumempfindliche Membranen hergestellt, die als ionenempfindliche Komponenten diejenige Verbindung der Formel I enthielten, in welcher sowohl der Rest $R^1$ als auch der Rest $R^2$ ein Cyclohexylrest ist.

Die beiden Membranen enthielten jeweils 2,6 Gew.-%, bezogen auf des Gesamtgewicht der Membran, an dieser ionenempfindlichen Komponente und ferner 32,3 Gew.-%, bezogen auf das Gesamtgewicht der Membran, an Polyvinylchlorid. Als Weichmacher enthielt die eine der beiden Membranen 64,7 Gew.-% an dem o-Nitrophenyl-n-octylether und ferner 0,4 Gew.-%, bezogen auf das Gesamtgewicht der Membran, an dem Zusatzstoff Kalium-tetrakis (p-chloro-phenyl)borat.
Die zweite lithiumselektive Elektrode enthielt als Weichmacher 64,5 Gew.-%, bezogen auf das Gewicht der Membran, an dem Ester-Weichmacher der Formel IV

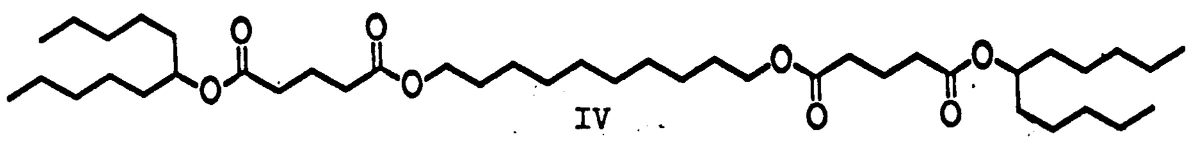

IV

und 0,6 Gew.-% des Zusatzes Kalium-tetrakis(p-chloro-phenyl)borat.

Diese beiden lithiumselektiven Membranen werden in der Folge als Membran 1 und Membran 2 bezeichnet.

Die dritte lithiumselektive Membran, nämlich die Membran 3 enthielt 2,0 Gew.-%, bezogen auf das Gesamtgewicht der Membran, einer lithiumselektiven Komponente der Formell II, nämlich die Verbindung der Struktur

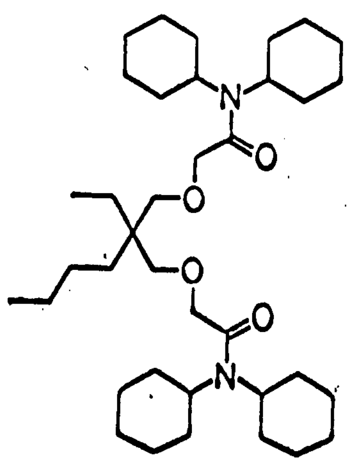

Des weiteren enthielt diese Membran 32,4 Gew.-%, bezogen auf das Gesamtgewicht der Membran, an Polyvinylchlorid und 65,6 Gew.-%, bezogen auf das Gesamtgewicht der Membran, eines Dicarbonsäurediesters als Weichmacher, und zwar des Adipinsäurediesters, in dem der veresternde Alkohol Nonan-5-ol ist.

Die vierte hergestellte Membran war eine natriumselektive Membran. Diese Membran 4 enthielt als ionenselektive Komponente diejenige Verbindung der weiter vorne angegebenen Formel III, in welcher die Gruppe der Formel

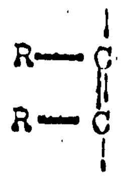

für einen aromatischen Rest der Formel

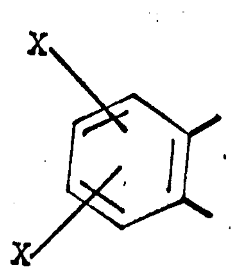

steht, in dem beide Gruppen X Wasserstoffatome sind.

Sie enthielt 1 Gew.-% dieser Komponente und ferner 33 Gew.-%, bezogen auf das Gesamtgewicht der Membran, an Polyvinylchlorid und ausserdem 66 Gew.-%, bezogen auf das Gesamtgewicht der Membran an dem Weichmacher der Formel IV.

Beispiel 2

In diesem Beispiel wird eine Durchflusselektrode beschrieben, die zur Bestimmung des Konzentrationsverhältnisses von Lithiumionen zu Natriumionen geeignet ist.

In Fig. 1 wird diese Durchflusselektrode schematisch dargestellt.

Die Probelösung wird in den Kanal 13 eingebracht. Sie kommt dabei sowohl mit der ionenempfindlichen Membran der natriumselektiven Elektrode 17 als auch mit der ionenempfindlichen Membran der Lithiumelektrode 7 in Berührung. Ferner ragt bei der hier dargestellten Ausführungsart auch die Commonelektrode, nämlich der Platindraht, in der Durchflusskanal.

Am oberen Ende des Durchflusskanales befindet sich ein Platinnetz 3. Die Anordnung ist auf der Bodenplatte 11 montiert und sie wird von dem Deckel 1 abgeschlossen. Der Durchflusskanal führt durch die Unterlagsscheibe 14 und die o-Ringe 5 hindurch.

Die Elektrodenfüllungen, also die Elektrolytlösungen der mit den o-Ringen 15 versehenen Natriumelektrode, bzw. Lithiumelektrode, befinden sich im Kontakt mit der ionenempfindlichen Membran, in dem mit unterbrochenen Linien schraffierten Teil der jeweiligen Elektrode.

Die Probe wird von oben durch das Platinnetz 3 eingebracht und fliesst schliesslich in den Kunststoffschlauch, der durch die Kunststoffschraube 12 durchführt. Die Abschirmung 8, die Bodenplatte 11 und der Deckel 1 bestehen aus Metall, beispielsweise Aluminium.

In dieser Anordnung wurden die in Beispiel 1 beschriebenen lithiumselektiven Membranen 1, 2 und 3 in Kombination mit der in Beispiel 1 beschriebenen natriumselektiven Membran 4 getestet.

Die innere Ableitung der Elektrode zur Bestimmung der Natriumionen ist mit der Commonelektrode elektrisch über ein Spannungsmessgerät verbunden (in Figur 1 nicht dargestellt) und auch die innere Ableitung der Elektrode zur Bestimmung der Lithiumionen ist mit der Commonelektrode über ein Spannungsmessgerät elektrisch verbunden (in Figur 1 ebenfalls nicht dargestellt).

Beispiel 3

Die ionenselektiven Komponenten der Membranen 1 und 3 des Beispiels 1 wurden in einer Matrix aus Polyvinylchlorid, gegebenenfalls in einer entsprechenden Matrix plus Weichmacher auf einen mit Silberchlorid beschichteten Silberdraht aufgebracht. Man erheilt so eine sogenannte Wireelektrode zur Bestimmung von Lithiumionen.

In der gleichen Weise wurde die ionenselektive Komponente der Membran 4 des Beipsiels 1, ebenfalls in einer Matrix aus Polyvinylchlorid, gegebenenfalls einer Matrix aus Polyvinlychlorid plus Weichmacher, auf einen mit Silberchlorid beschichteten Silberdraht aufgebracht. Man erhielt so eine gegenüber Natriumionen

selektive Wireelektrode. Diese Wireelektroden wurden in die Probelösung eingetaucht und elektrisch über ein Spannungsmessgerät verbunden. Mit dieser Vorrichtung konnte in hoher Genauigkeit das Konzentrationsverhältnis von Lithiumionen zu Natriumionen in der Probelösung bestimmt werden. Bei einer entsprechenden elektrischen Schaltung über eine Commonelektrode war in manchen Fällen die Reproduzierbarkeit noch höher.

Beispiel 4

In der gleichen Weise, wie in Beispiel 3 beschrieben, wurden die ionenempfindlichen Komponenten der Membranen 1 und 3, bzw. die ionenempfindliche Komponente der Membran 4 des Beispiels 1 verwendet, um nach der Planartechnik einen Sensor für die Bestimmung des Konzentrationsverhältnisses von Lithiumionen zu Natriumionen zu erzeugen. Ueber eine ebene Leiterbahn aus Silber/Silberchlorid wurde auf getrennten Oberflächen das Material der natriumselektiven Komponente der Membran 4 des Beispiels 1, bzw. das Material jeweils einer der lithiumselektiven Komponenten der Membranen 1 und 3 des Beispiels 1 aufgebracht. Auch mit den so erzeugten ionenselektiven Feldeffekttransistoren liess sich das Konzentrationsverhältnis an Lithiumionen zu Natriumionen mit hoher Genauigkeit und hervorragender Reproduzierbarkeit bestimmen.

Beispiel 5

Die lithiumselektiven Membranen 1, 2 und 3 des Beispiels 1 wurden kombiniert mit der natriumselektiven Membran 4 des Beispiels 1, in der in Beispiel 2 beschriebenen Durchflusselektrode getestet.

In wässrigen Lösungen und im Blutserum zeigte es sich, dass nach dem erfindungsgemässen Verfahren das Konzentrationsverhältnis von Lithiumionen zu Natriumionen in den Probelösungen mit hoher Genauigkeit und Reproduzierbarkeit bestimmt werden kann, und daraus sieht man, dass die Voraussetzungen erfüllt sind, die bei der Aufstellung der Gleichung gemacht wurden, welche den Zusammenhang zwischen der gemessenen EMK und dem Konzentrationsverhältnis von Lithiumionen zu Natriumionen angibt.

In Figur 2 ist die entsprechende Messkurve dargestellt. Auf der Ordinate ist die gemessene EMK in mV aufgetragen. Auf der Abszisse ist der Wert für

$$\log \frac{c_{Li}}{c_{Na}}$$

angegeben.

Die Messung wurde unter Verwendung eines Blutserums durchgeführt, das einen Natriumgehalt von 145 mmol aufwies. Zu diesem Blutserum wurden kleine Anteile einer Lösung zugesetzt, die 50 mmol an Lithiumchlorid und 135 mmol an Natriumchlorid enthielt.

Die gemessene Kurve steht in sehr guter Uebereinstimmung mit der angenommenen Gleichung. Die Krümmung der Kurve entspricht einer

$$\log K_{LiNa}^{Pot} = -1.88.$$

Ferner zeigte es sich, dass die restliche Standardabweichung extrem gering war, und nur 0.06 mV betrug. Die Bestimmung des Konzentrationsverhältnisses von Lithiumionen zu Natriumionen in den Serumproben konnte also mit weit höherer Genauigkeit und viel besserer Reproduzierbarkeit vorgenommen werden, als nach den bisher bekannten Methoden zur Bestimmung von Lithiumionen im Serum, nämlich nach der Methode der Flammenphotometrie oder der Atomabsorptionsspektrometrie.

Die in Figur 2 dargestellte Messkurve wurde unter Verwendung der lithiumselektiven Membran 3 und der natriumselektiven Membran 4 gemessen.

**Patentansprüche**

1. Verfahren zur Bestimmung des Konzentrationsverhältnisses von Lithiumionen zu Natriumionen in einer Probelösung, bei dem man
   A) in die Probelösung entweder eine Elektrode zur Bestimmung von Lithiumionen und eine Elektrode zur Bestimmung von Natriumionen eintaucht und die Potentialdifferenz Δ V zwischen den beiden Elektroden bestimmt oder
   B) bei dem man in die Probelösung eine Elektrode zur Bestimmung von Lithiumionen, eine Elektrode zur Bestimmung von Natriumionen eintaucht und eine einzige äussere Referenzelektrode oder eine Commonelektrode verwendet, die Potentialdifferenz $V_1$ zwischen der Lithiumelektrode und der Referenzelektrode oder der Commonelektrode und die Potentialdifferenz $V_2$ zwischen der Natriumelektrode und der Referenzelektrode oder der Commonelektrode bestimmt, wobei $V_1 - V_2$ die Potentialdifferenz Δ V zwischen der Lithiumelektrode und der Natriumelektrode ergibt und
   bei dem man aus der Potentialdifferenz Δ V das Konzentrationsverhältnis von Lithiumionen zu Natriumionen berechnet.

2. Anwendung des Verfahrens nach Anspruch 1 zur Bestimmung des Konzentrationsverhältnisses von Lithiumionen zu Natriumionen in einer Probelösung, die wesentlich höhere Gehalte an Natriumionen aufweist als an Lithiumionen-beispielsweise in einer Blutprobe, in welcher die Lithiumkonzentration im Bereich von 0,7 - 1,5 mmol liegt, während die Natriumkonzentration bei 135 - 150 mmol liegt.

3. Vorrichtung zur Durchführung des Verfahrens gemäss Anspruch 1, die
   A) eine Elektrode zur Bestimmung der Aktivität von Lithiumionen, die eine für Lithiumionen empfindliche Komponente enthält und
   eine Elektrode zur Bestimmung der Aktivität von Natriumionen, die eine für Natriumionen empfindliche Komponente erthält, aufweist und wobei
   die Lithiumelektrode über ein Spannungsmessgerät mit der Natriumelektrode verbunden ist oder die
   B) zusätlich zu der Lithiumelektrode und der Natriumelektrode noch eine gemeinsame Referenzelektrode oder eine Commonelektrode aufweist und wobei die Lithiumelektrode mit der Referenzelektrode oder der Commonelektrode über ein Spannungsmessgerät elektrisch verbunden ist und die Natriumelektrode ebenfalls über ein Spannungsmessgerät mit der gleichen Referenzelektrode oder Commonelektrode elektrisch verbunden ist,
   und bei der der ionenempfindliche Teile der Lithiumelektrode und der ionenempfindliche Teil der Natriumelektrode bzw. die Referenzelektrode oder Commonelektrode so angeordnet sind, daß sie sich im Betrieb in Berührung mit der Probelösung befinden.

4. Vorrichtung gemäss Anspruch 3, dadurch gekennzeichnet, dass sie
   A) eine Elektrode zur Bestimmung der Aktivität von Lithiumionen aufweist, die eine innere Elektrodenfüllung, in die eine innere Ableitung eintaucht und eine für Lithiumionen empfindliche Membran aufweist, welche eine für Lithiumionen empfindliche Komponente enthält,
   eine Elektrode zur Bestimmung der Aktivität von Natriumionen aufweist, die eine innere Elektrodenfüllung, in welche eine innere Ableitung eintaucht und eine für Natriumionen empfindliche Membran aufweist, die eine für Natriumionen empfindliche Komponente enthält und dass
   die innere Ableitung der Lithiumelektrode über ein Spannungsmessgerät mit der inneren Ableitung der Natriumelektrode verbunden ist oder dass
   B) die Vorrichtung zusätzlich zu der Lithiumelektrode und der Natriumelektrode noch eine gemeinsame Referenzelektrode oder eine Commonelektrode aufweist und die innere Ableitung der Lithiumelektrode mit der Referenzelectrode oder der Commonelektrode über ein Spannungsmessgerät elektrisch verbunden ist und die innere Ableitung der Natriumelektrode ebenfalls über ein Spannungsmessgerät mit der gleichen Referenzelektrode oder Commonelektrode elektrisch verbunden ist,
   und dass sich die ionenempfindliche Membran der Lithiumelektrode und die ionenempfindliche Membran der Natriumelektrode bzw. die Referenzelektrode im Betrieb eingetaucht in der Probelösung befinden.

5. Vorrichtung nach Anspruch 4, dadurch gekennzeichnet, dass sie eine Durchflusselektrodenanordnung ist, die einen dünnen Kanal zur Aufnahme der Probelösung aufweist und dass in diesen Kanal die ionenempfindliche Membran der Lithiumelektrode und die ionenempfindliche Membran der Natriumelektrode bzw. die Referenzelektrode bzw. die Commonelektrode hineinragt.

6. Vorrichtung nach Anspruch 4 oder 5, dadurch gekennzeichnet, dass die ionenempfindliche Membran der Lithiumelektrode eine Polymermatrix aus Polyvinylchlorid, einen Weichmacher und die für Lithiumionen empfindliche Komponente enthält und dass die ionenempfindliche Membran der Natriumelektrode eine Polymermatrix aus Polyvinylchlorid, einen Weichmacher und die für Natriumionen empfindliche Komponente enthält.

7. Vorrichtung gemäss Anspruch 3, dadurch gekennzeichnet, dass sie eine Anordnung nach der Planartechnik ist, bei der eine lithiumempfindliche Miniaturelektrode in Form eines auf des Gate eines Feldeffekttransistors aufgebrachten Oberflächenbereiches vorliegt, der eine für Lithiumionen empfindliche Komponente enthält und die natriumempfindliche Miniaturelektrode in Form eines auf das Gate eines Feldeffekttransistors aufgebrachten Oberflächenbereiches vorliegt, der eine für Natriumionen empfindliche Komponente enthält oder dass in dieser Vorrichtung die Elektrode zur Bestimmung der Aktivität der Lithiumionen und auch die Elektrode zur Bestimmung der Aktivität der Natriumionen eine sogenannte "Coated Wire Electrode" ist, bei der sich die ionenselektive Komponente direkt auf einem elektrischen Leiter befindet,
wobei in diesen sehr kleinen Messvorrichtungen wiederum Spannungsmessgeräte vorhanden sind, die entweder direkt zur Bestimmung der Spannung zwischen der lithiumempfindlichen Miniaturelektrode und der natriumempfindlichen Miniaturelektrode geeignet sind oder wobei die Spannungsmessgeräte zur Bestimmung der Spannung zwischen der lithiumempfindlichen Miniaturelektrode und einer Commonelektrode oder Referenzelektrode und zur Bestimmung der Spannung zwischen der natriumempfindlichen Miniaturelektrode und der Commonelektrode oder Referenzelectrode geeignet sind und
wobei die auf dem Gate des Feldeffekttransistors aufgebrachte lithium- bzw. natriumselektive Komponente vorzugsweise eingebettet in einer Polymermatrix vorliegt und die auf der "Coated Wire Electrode" befindliche lithium- bzw. natriumselektive Komponente vorzugsweise eingebettet in einer Polymermatrix vorliegt.

8. Vorrichtung nach einem der Ansprüche 3 bis 7, dadurch gekennzeichnet, dass die lithiumselektive Komponente der Lithiumelektrode entweder ein Cyclohexan-1,2-dicarbonsäurediamid der Formel I

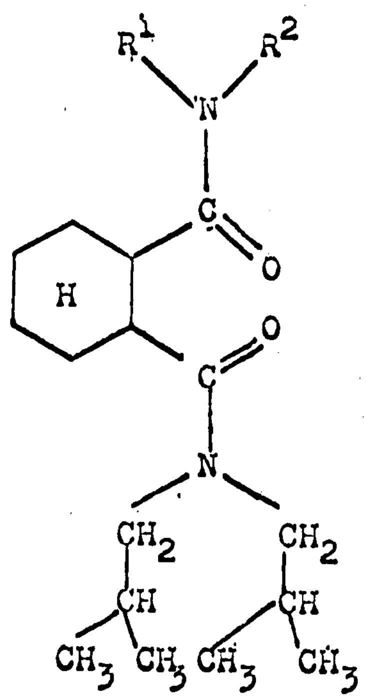

I

worin die Gruppierung der Formel

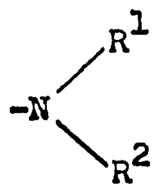

entweder die Formel

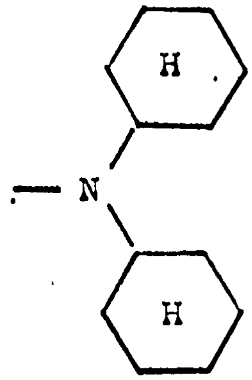

oder die Formel

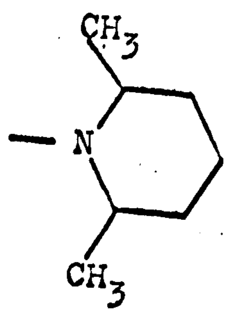

aufweist,
oder ein Dicarbonsäurediamid der Formel II

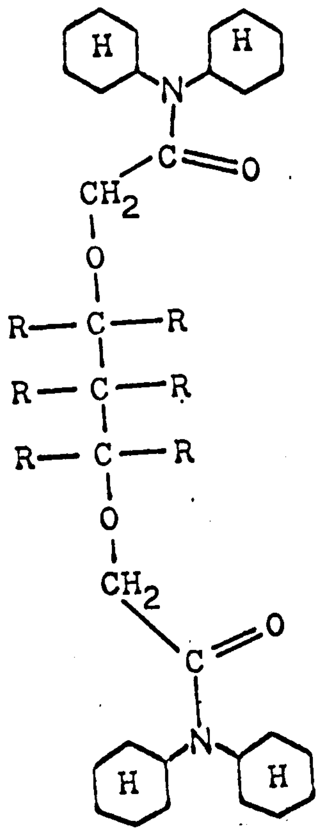

II

ist, worin R Wasserstoff, Alkyl, Alkenyl oder Alkinyl mit jeweils bis zu 20 Kohlenstoffatomen bedeutet.

**9.** Vorrichtung gemäss einem der Ansprüche 3 bis 8, dadurch gekennzeichnet, dass die natriumselektive Komponente der Natriumelektrode ein Dicarbonsäurediamid ist, vorzugsweise ein solches, bei dem die beiden Carboxamidgruppen des Dicarbonsäurediamides jeweils über einen 1 bis 4 Kettenglieder aufweisenden aliphatischen Rest, dessen Kette eine Kohlenwasserstoffkette oder eine durch eine Aethersauerstoffatom unterbrochene Kohlenwasserstoffkette ist, an einen gesättigten oder ungesättigten aliphatischen Rest, einen cycloaliphatischen Rest oder einen aromatischen Rest gebunden ist.

**10.** Vorrichtung nach Anspruch 9, dadurch gekennzeichnet, dass die natriumselektive Komponente der Natriumelektrode die folgende Formel III

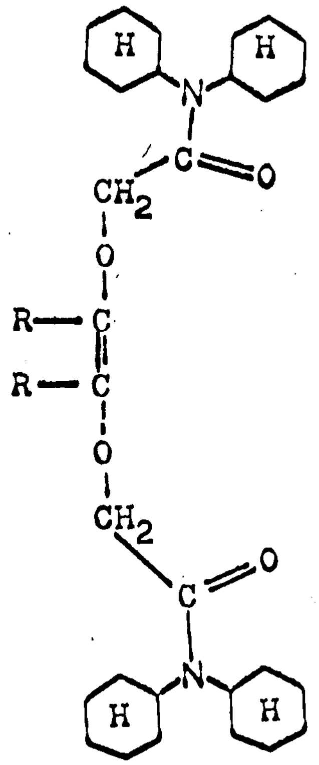

III

aufweist, in welcher die Reste R unabhängig voneinander Wasserstoffatome, Alkylgruppen, Alkenylgruppen oder Alkinylgruppen mit bis zu 20 Kohlenstoffatomen darstellen oder
die beiden Reste R bemeinsam mit den Kohlenstoffatomen, an welche sie gebunden sind, einen cycloaliphatischen oder aromatischen Rest darstellen und wobei vorzugsweise die Gruppe der Formel

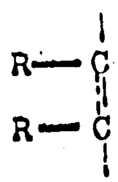

für einen aromatischen Rest der Formel

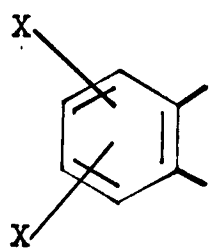

steht, in welcher die beiden Substituenten X unabhängig voneinander für Wasserstoffatome, relativ unpolare Substituenten, wie Alkylgruppen, Alkenylgruppen, Nitrogruppen oder Halogenatome stehen oder die beiden Gruppen X gemeinsam mit den Kohlenstoffatomen, an welche sie gebunden sind, einen ankondensierten, aromatischen oder heteroaromatischen Kern darstellen.

## Claims

1. Method of determining the ratio of concentration of lithium ions to sodium ions in a test solution, in which
   A) either an electrode for determining lithium ions and an electrode for determining sodium ions are immersed in the test solution and the potential difference Δ V between the two electrodes is determined or
   B) in which an electrode for determining lithium ions and an electrode for determining sodium ions are immersed in the test solution and a single external reference electrode or a common electrode is used, the potential difference $V_1$ between the lithium electrode and the reference electrode or the common electrode and the potential difference $V_2$ between the sodium electrode and the reference electrode or the common electrode are determined, where $V_1 - V_2$ produces the potential difference Δ V between the lithium electrode and the sodium electrode, and
   in which there is calculated from the potential difference Δ V the ratio of concentration of lithium ions to sodium ions.

2. Application of the method according to claim 1 for determining the ratio of concentration of lithium ions to sodium ions in a test solution that exhibits substantially higher contents of sodium ions than lithium ions - for example in a blood sample in which the lithium concentration is in the range from 0.7 to 1.5 mmol, while the sodium concentration is from 135 to 150 mmol.

3. Apparatus for implementing the method according to claim 1, which
   A) exhibits an electrode for determining the activity of lithium ions which contains a component sensitive to lithium ions and an electrode for determining the activity of sodium ions which contains a component sensitive to sodium ions and in which the lithium electrode is connected to the sodium electrode via a voltmeter or which
   B) in addition to the lithium electrode and the sodium electrode also comprises a joint reference electrode or a common electrode and in which the lithium electrode is connected electrically to the reference electrode or the common electrode via a voltmeter and the sodium electrode is likewise connected electrically via a voltmeter to the same reference electrode or common electrode,
   and in which the ion-sensitive part of the lithium electrode and the ion-sensitive part of the sodium electrode or alternatively the reference electrode or common electrode are so arranged that they come in contact with the test solution when in operation.

4. Apparatus according to claim 3, **characterised in that** it
   A) exhibits an electrode for determining the activity of lithium ions which exhibits an inner electrode filling in which an inner lead is immersed and a membrane sensitive to lithium ions which contains a component sensitive to lithium ions, an electrode for determining the activity of sodium ions which exhibits an inner electrode filling in which an inner lead is immersed and a membrane sensitive to sodium ions which contains a component sensitive to sodium ions, and that
   the inner lead of the lithium electrode is connected via a voltmeter to the inner lead of the sodium electrode, or that
   B) the apparatus in addition to the lithium electrode and the sodium electrode also comprises a joint reference electrode or a common electrode and the inner lead of the lithium electrode is connected electrically to the reference electrode or the common electrode via a voltmeter and the inner lead of the sodium electrode is likewise connected electrically via a voltmeter to the same reference electrode or common electrode, and that the ion-sensitive membrane of the lithium electrode and the ionsensitive membrane of the sodium electrode or alternatively the reference electrode are immersed in the test solution when in operation.

5. Apparatus according to claim 4, **characterised in that** it is a flow-type electrode arrangement which exhibits a narrow groove for accommodating the test solution and that the ionsensitive membrane of the lithium electrode and the ion-sensitive membrane of the sodium electrode or alternatively the reference electrode or the common electrode project into said groove.

6. Apparatus according to claim 4 or 5, **characterised in that** the ion-sensitive membrane of the lithium electrode contains a polymer matrix of polyvinyl chloride, a plasticizer and the component sensitive to lithium ions and that the ion-sensitive membrane of the sodium electrode contains a polymer matrix of

polyvinyl chloride, a plasticizer and the component sensitive to sodium ions.

**7.** Apparatus according to claim 3, **characterised in that** it is an arrangement according to planar technology, in which a lithium-sensitive miniature electrode is present in the form of a surface region applied to the gate of a field-effect transistor, said surface region containing a component sensitive to lithium ions, and the sodium-sensitive miniature electrode is present in the form of a surface region applied to the gate of a field-effect transistor, said surface region containing a component sensitive to sodium ions, or that in said arrangement the electrode for determining the activity of the lithium ions and also the electrode for determining the activity of the sodium ions is a so-called "coated wire electrode", in which the ionselective component is located directly on an electric conductor,
in which there are present in turn in said very small test apparatuses voltmeters, which either are suited directly to determining the voltage between the lithium-sensitive miniature electrode and the sodium-sensitive miniature electrode or in which the voltmeters are suited to determining the voltage between the lithium-sensitive miniature electrode and a common electrode or reference electrode and to determining the voltage between the sodium-sensitive miniature electrode and the common electrode or reference electrode and
in which the lithium- or sodium-selective component applied to the gate of the field-effect transistor is present preferably embedded in a polymer matrix and the lithium- or sodium-selective component located on the "coated wire electrode" is present preferably embedded in a polymer matrix.

**8.** Apparatus according to any one of claims 3 to 7, **characterised in that** the lithium-selective component of the lithium electrode is either a cyclohexane-1,2-dicarboxylic acid diamide of Formula I

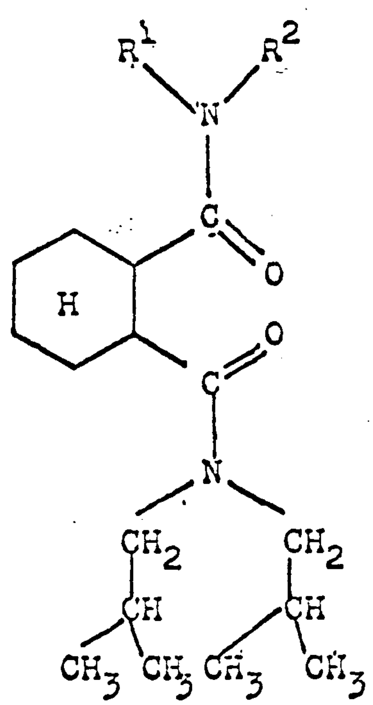

I

where the grouping with the formula

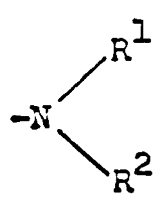

exhibits either the formula

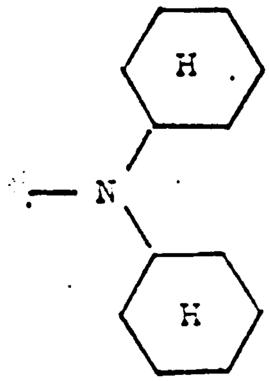

or the formula

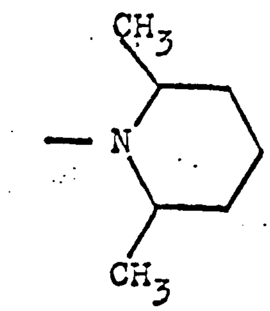

or is a dicarboxylic acid diamide of Formula II

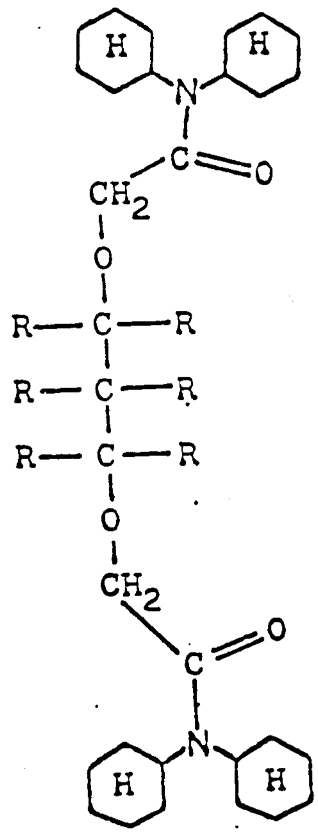

II

where R signifies hydrogen, alkyl, alkenyl or alkynyl with up to 20 carbon atoms in each case.

**9.** Apparatus according to any one of claims 3 to 8, **characterised in that** the sodium-selective component of the sodium electrode is a dicarboxylic acid diamide, preferably one in which the two carboxamide groups of the dicarboxylic acid diamide are bonded, in each case via an aliphatic residue exhibiting 1 to 4 links and whose chain is a hydrocarbon chain or a hydrocarbon chain interrupted by an ether oxygen atom, to a saturated or unsaturated aliphatic residue, a cycloaliphatic residue or an aromatic residue.

**10.** Apparatus according to claim 9, **characterised in that** the sodium-selective component of the sodium electrode exhibits the following Formula III

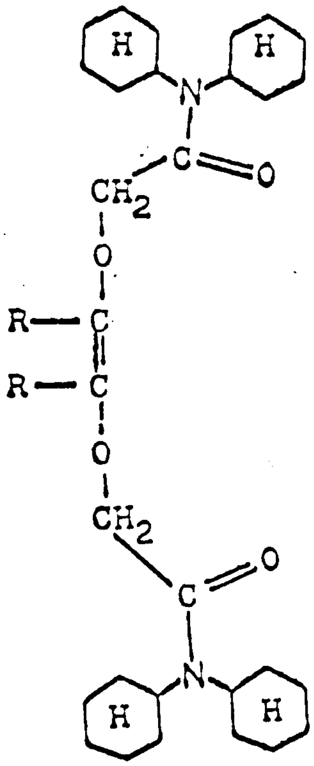

III

in which the residues R represent independently of one another hydrogen atoms, alkyl groups, alkenyl groups or alkynyl groups with up to 20 atoms or
the two residues R represent jointly with the carbon atoms to which they are bonded a cycloaliphatic or aromatic residue and in which preferably the group with the formula

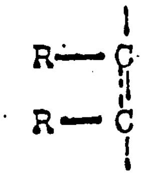

stands for an aromatic residue with the formula

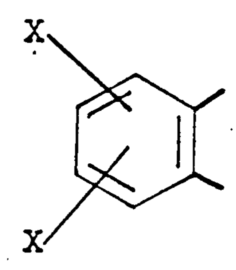

in which the two substituents X stand independently of one another for hydrogen atoms, relatively non-polar substituents such as alkyl groups, alkenyl groups, nitro groups or halogen atoms or the two groups X represent jointly with the carbon atoms to which they are bonded a fused, aromatic or heteroaromatic nucleus.

## Revendications

1. Procédé pour déterminer le rapport entre la concentration en ions lithium et la concentration en ions sodium dans une solution d'essai, dans lequel
   A) on immerge dans la solution d'essai une électrode pour la détermination des ions lithium et une électrode pour la détermination des ions sodium et on détermine la différence de potentiel Δ V entre les deux électrodes,
   ou
   B) on immerge dans la solution d'essai une électrode pour la détermination des ions lithium, une électrode pour la détermination des ions sodium, et on utilise une seule électrode de référence extérieure ou une électrode commune, et on détermine la différence de potentiel $V_1$ entre l'électrode du lithium et l'électrode de référence ou l'électrode commune et la différence de potentiel $V_2$ entre l'électrode du sodium et l'électrode de référence ou l'électrode commune, $V_1$ - $V_2$ donnant la différence de potentiel Δ V entre l'électrode du lithium et l'électrode du sodium, et
   dans lequel on calcule le rapport entre les concentrations en ions lithium et en ions sodium à partir de la différence de potentiel Δ V.

2. Application du procédé selon la revendication 1 pour déterminer le rapport entre les concentrations en ions lithium et en ions sodium dans une solution d'essai présentant une teneur en ions sodium substantiellement supérieure à sa teneur en ions lithium, par exemple dans un échantillon de sang dans lequel la concentration en lithium est de 0,7 à 1,5 mmol, alors que la concentration en sodium est d'environ 135 à 150 mmol.

3. Dispositif pour l'exécution du procédé selon la revendication 1,
   A) comportant une électrode pour déterminer l'activité des ions lithium, qui contient un composant sensible aux ions lithium, et une électrode pour déterminer l'activité des ions sodium, contenant un composant sensible aux ions sodium, l'électrode du lithium etant reliée à l'électrode du sodium via un voltmètre, ou
   B) comportant, en plus de l'électrode du lithium et de l'électrode du sodium, une électrode de référence commune ou une électrode commune, l'électrode du lithium étant reliée électriquement avec l'électrode de référence ou l'électrode commune via un voltmètre, et l'électrode du sodium étant également reliée électriquement via un voltmètre avec l'électrode de référence ou l'électrode commune, et la partie sensible aux ions de l'électrode du lithium et la partie sensible aux ions de l'électrode du sodium, ainsi que l'électrode de référence ou l'électrode commune étant disposées de telle manière qu'elles se trouvent en contact avec la solution d'essai durant l'utilisation.

4. Dispositif selon la revendication 3, caractérisé en ce que
   A) ce dispositif présente une électrode pour la détermination de l'activité des ions lithium, contenant un remplissage intérieur d'électrode dans lequel est immergée une dérivation intérieure et une membrane sensible aux ions lithium contenant un composant sensible aux ions lithium, une électrode pour la détermination de l'activité des ions sodium, contenant un remplissage intérieur d'électrode dans lequel est immergée une dérivation intérieure et une membrane sensible aux ions sodium contenant un composant sensible aux ions sodium, et que la dérivation intérieure de l'électrode du lithium est reliée via un voltmètre avec la dérivation intérieure de l'électrode du sodium, ou que
   B) le dispositif comporte, en plus de l'électrode du lithium et de l'électrode du sodium, une électrode de référence commune ou une électrode commune et que la dérivation intérieure de l'électrode du lithium est reliée électriquement via un voltmètre avec l'électrode de référence ou l'électrode commune et la dérivation intérieure de l'électrode du sodium est également reliée électriquement via un voltmètre à la même électrode de référence ou à l'électrode commune, et que la membrane sensible aux ions de l'électrode du lithium et la membrane sensible aux ions de l'électrode du sodium, et l'électrode de référence se trouvent plongées dans la solution d'essai durant le fonctionnement.

5. Dispositif selon la revendication 4, caractérisé en ce qu'il consiste en un dispositif d'électrode parcouru comprenant un conduit mince pour recevoir la solution d'essai et que la membrane sensible aux ions de l'électrode du lithium et la membrane sensible aux ions de l'électrode du sodium et l'électrode de référence ou l'électrode commune pénètrent dans ce conduit.

6. Dispositif selon la revendication 4 ou 5, caractérisé en ce que la membrane sensible aux ions de l'électrode du lithium contient une matrice polymère en chlorure de polyvinyle, un plastifiant et le composant sensible aux ions lithium, et que la membrane sensible aux ions de l'électrode du sodium contient une matrice polymère en chlorure de polyvinyle, un plastifiant et le composant sensible aux ions sodium.

7. Dispositif selon la revendication 3, caractérisé en ce qu'il consiste en un dispositif selon la technique planaire dans lequel se trouve une électrode miniature sensible au lithium réalisée sous forme d'une zone de surface appliquée sur la grille d'un transistor à effet de champ et comportant un composant sensible aux ions lithium et l'électrode miniature sensible aux ions sodium sous forme d'une zone de surface appliquée sur la grille d'un transistor à effet de champ et contenant un composant sensible aux ions sodium, ou que, dans ce dispositif, l'électrode pour la détermination de l'activité des ions lithium et également l'électrode pour la détermination de l'activité des ions sodium sont des "Coated Wire Electrodes" (électrodes à fil enrobé) dans lesquelles le composant sélectif à l'égard des ions se trouve directement sur un conducteur électrique, ce très petit dispositif de mesure comportant également des voltmètres qui sont appropriés soit directement pour déterminer la tension entre l'électrode miniature sensible au lithium et l'électrode miniature sensible au sodium, soit pour déterminer la tension entre l'électrode miniature sensible au lithium et une électrode commune ou unes électrode de référence et pour déterminer la tension entre l'électrode miniature sensible au sodium et l'électrode commune ou l'électrode de référence, et le composant sélectif à l'égard du lithium ou du sodium appliqué sur la grille du transistor à effet de champ étant de préférence enrobé dans une matrice polymère et le composant sélectif à l'égard du lithium ou du sodium qui se trouve sur la "Coated Wire Electrode" étant de préférence enrobé dans une matrice polymère.

8. Dispositif selon l'une des revendications 3 à 7, caractérisé en ce que le composant sélectif à l'égard du lithium de l'électrode sensible au lithium est un diamide d'acide cyclohexane-1,2-dicarboxylique de formule I

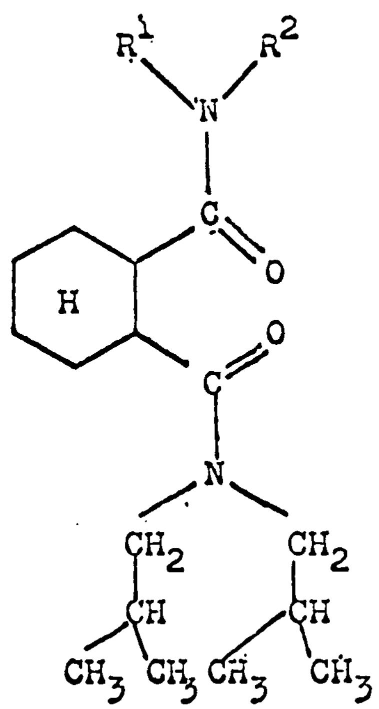

I

dans laquelle le groupement de formule

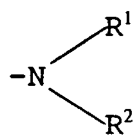

répond à la formule

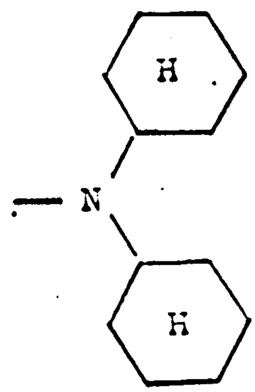

ou à la formule

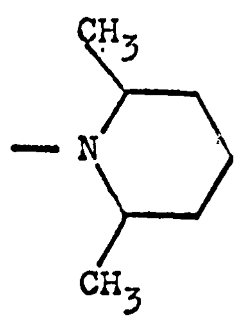

ou un diamide d'acide dicarboxylique de formule II

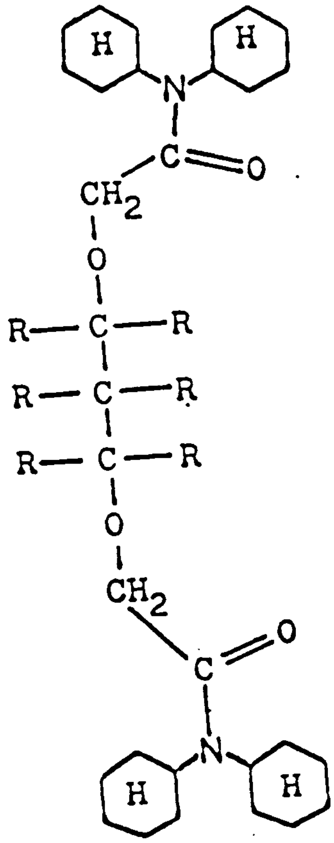

II

dans laquelle R signifie l'hydrogène, un groupe alkyle, alcényle ou alcinyle avec chaque fois 20 atomes de carbone.

**9.** Dispositif selon l'une des revendications 3 à 8, caractérisé en ce que le composant sélectif de l'électrode du sodium est un diamide d'acide dicarboxylique, de préférence dans lequel les deux groupes carboxamide du diamide d'acide dicarboxylique sont chaque fois liés, via un reste aliphatique comportant 1 à 4 chaînons, dont la chaîne est une chaîne hydrocarbonée ou une chaîne hydrocarbonée interrompue par un atome d'oxygène d'éther, à un reste aliphatique, un reste cycloaliphatique saturé ou insaturé ou un reste aromatique.

**10.** Dispositif selon la revendication 9, caractérisé en ce que le composant sélectif à l'égard du sodium de l'électrode du sodium répond à la formule III suivante

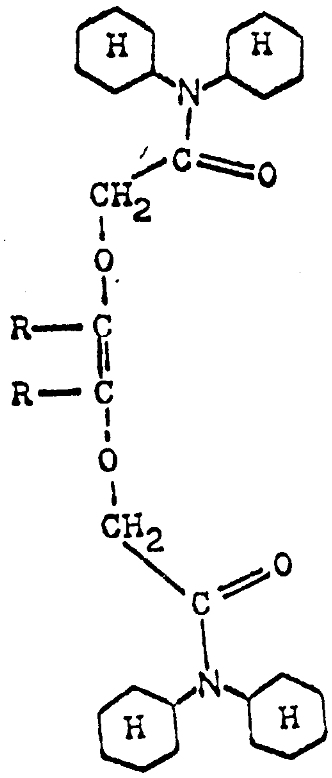

III

dans laquelle les restes R représentent indépendamment l'un de l'autre des atomes d'hydrogène, des groupes alkyle, des groupes alcényle ou des groupes alcinyle avec jusqu'à 20 atomes de carbone, ou les deux restes R représentent, ensemble avec les atomes de carbone auxquels ils sont liés, un reste cycloaliphatique ou un reste aromatique, et où de préférence le groupe de formule

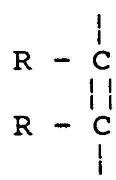

représente un reste aromatique de formule

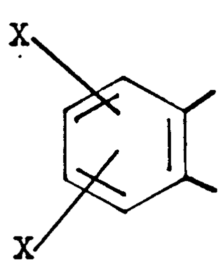

dans lequel les deux substituants X représentent indépendamment l'un de l'autre des atomes d'hydrogène, des substituants relativement non-polaires comme des groupes alkyle, des groupes alcényle, des groupes nitro ou des atomes d'halogène, ou les deux groupes X représentent, ensemble avec les

atomes de carbone auxquels ils sont liés, un noyau aromatique ou hétéroaromatique condensé ou accolé au précédent.

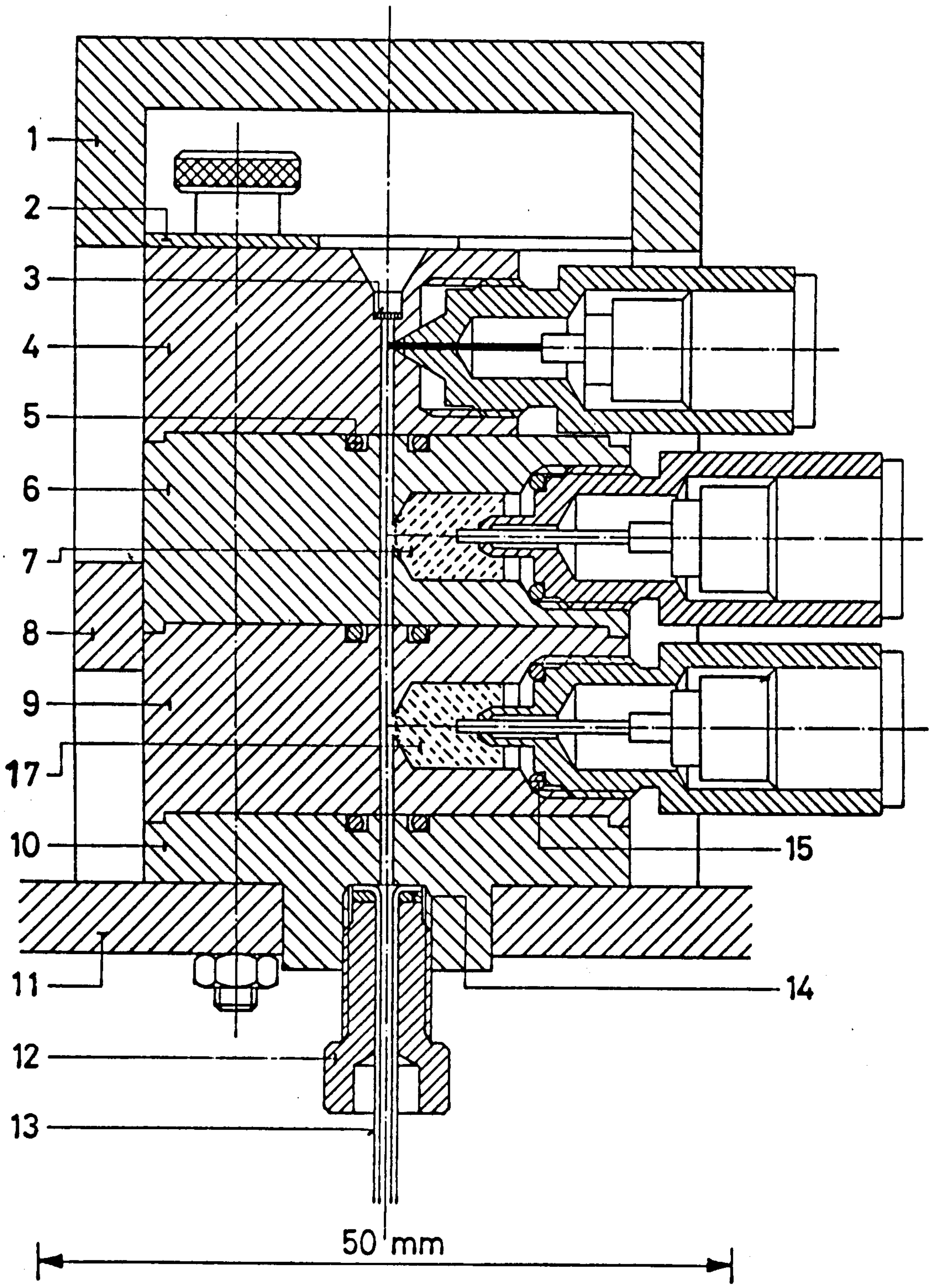


Fig. 1

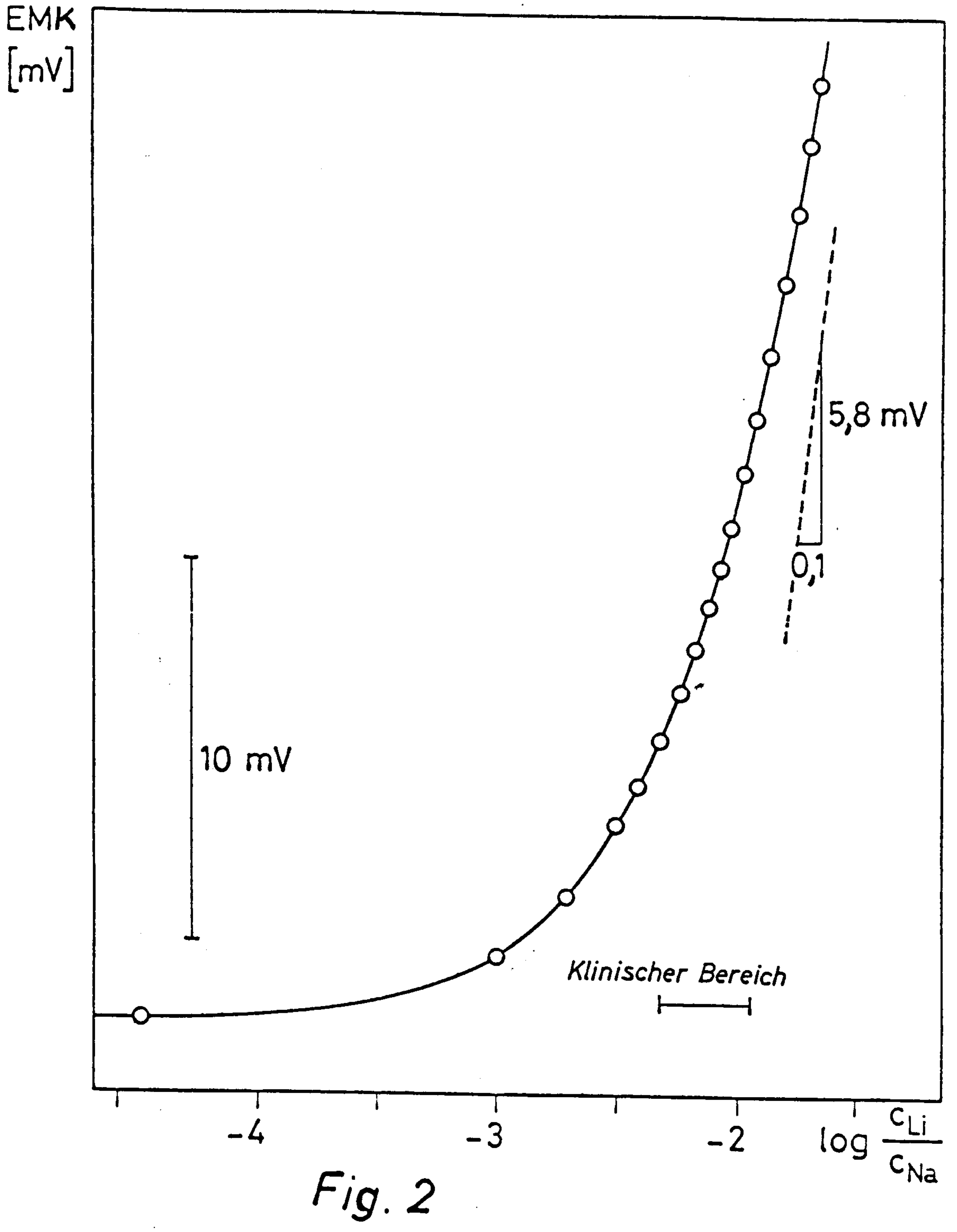


*Fig. 2*